# EUROPEAN PATENT APPLICATION

(11) **EP 1 178 387 A2**
(43) Date of publication of application: **06.02.2002**
(21) Application number: 01306649.3
(22) Date of filing: 03.08.2001
(51) Int. Cl.: G06F 1/00

(54) **Integrated circuit for confidential data protection**

(30) Priority: 04.08.2000 JP 2000237017; 26.01.2001 JP 2001019267
(71) Applicant: MATSUSHITA ELECTRIC INDUSTRIAL CO., LTD., Kadoma-shi, Osaka 571-8501 (JP)
(72) Inventor: Kitamura, Tomohiko, Hirakata-shi, Osaka-fu, 573-0034 (JP)
(74) Representative: Crawford, Andrew Birkby

(57) **Abstract**

A system integrated circuit prevents a storage region of confidential data that has been read from a memory device from being revealed by tracing the operation of an internal CPU. The confidential data is stored in a secondary memory and is used by the CPU. The confidential data is read from the secondary memory to a primary memory at initialization of an apparatus in which the system integrated circuit is incorporated. Specifically, an initial-state management unit (15) reads the confidential data from the memory devices (101 or 111), and stores it into one of storage regions in the primary memory at the initialization of the apparatus. The initial-state management unit (15) then instructs the CPU to start its operation. Even if thorough reverse analysis is performed on the operation of the CPU, the storage region of the confidential data is not revealed.

## Description

### BACKGROUND OF THE INVENTION

### (Field of the Invention)

The present invention relates to a system integrated circuit in which various circuits such as a central processing unit are integrated. More particularly, the present invention relates to an improvement in the system integrated circuit when it is incorporated in an apparatus and processes confidential data.

### (Background Art)

With the rapid progress in semiconductor process technology, apparatuses internally equipped with a system LSI (Large Scale Integrated circuit) have increasingly been widespread. These system LSI built-in apparatuses each include a system LSI and at least one memory device, and are utilized as wide variety of apparatuses, such as set-top boxes (STB) and portable apparatuses. Among circuits to realize these apparatuses, logic circuits are mounted within the system LSI. The logic circuits include a central processing unit (CPU), a cache memory that is used by the CPU, a register, a TS decoder for demultiplexing a transport stream, and an MPEG decoder for decoding an MPEG stream. These logic circuits are integrated within the system LSI so that the stable operations of these logic circuits can be ensured. On the contrary, a ROM for storing a program and data is mounted outside the system LSI as a memory device . Because the program and the data are present outside the system LSI, their contents can be changed by rewriting the contents of the memory device without altering the system LSI.

In some cases, users are charged fees to receive pay broadcasts or to reproduce pay contents via apparatuses such as STBs. In such a case, a memory device in each STB is required to store such data as identification information for the apparatus (apparatus ID) and identification information for the user (user ID) that need to be treated as confidential. However, the contents of the memory device are at the risk of being revealed by "reverse-analysis" which is a technique to analyze a product's contents. In view of this, a conventional apparatus encrypts confidential data and stores the encrypted confidential data into a memory device, for preventing the confidential data from being revealed by the reverse-analysis.

Since the confidential data is stored in the memory device with being encrypted as described above, hacking into the apparatus can be prevented.

However, while the confidential data is perfectly being encrypted at the time the data is stored into the memory device, a program stored in the memory device is often not being encrypted. By dissembling such a program with reference to a mnemonic list of the CPU, the operation of the CPU can be traced. The apparatus ID and the user ID are often read from the memory device into the system LSI at the initial operation of the CPU. Therefore, by analyzing the read command issued from the CPU in the system LSI to the memory device at the initial operation of the CPU, a storage region of the confidential data, out of a plurality of registers and memories provided in the system LSI, can be detected.

The confidential data is stored in the registers or the memories provided in the system LSI in a state of being decrypted by a decryption unit. This means that the confidential data that is not being encrypted can be obtained by performing thorough reverse analysis using the detected storage region of the confidential data as a clue. The confidential data obtained in this way might be used by third parties to hack into the apparatus. If this happens, the manufacture of the apparatus and companies dealing with the pay broadcasts and the pay contents might receive substantial damages.

The leakage of the confidential data seems to be prevented if deassemble of a program is prevented by encrypting the program as one example. However, the development in techniques relating to the reverse analysis is so remarkable that only a subtle trace left during the operation of the CPU being observed outside the system LSI might be used as a clue to detect a storage region of the confidential data. Given a future demand for the above apparatus to handle with the electronic money, manufactures of system LSIs are required to provide these system LSIs with drastic countermeasures against the development of the reverse analysis.

### SUMMARY OF THE INVENTION

The object of the present invention is to provide a system LSI that is capable of preventing a storage region of confidential data that has been read from a memory device from being revealed, even if the operation of a CPU within the system LSI is traced.

The above object can be achieved by a system integrated circuit that is incorporated into an apparatus together with a memory device, the memory device storing confidential data, the system integrated circuit including: a central processing unit; an access unit for reading and writing to and from the memory device; an indication unit for performing an indication operation at initialization of the apparatus, the indication operation indicating to the central processing unit to start up; and a read control unit for performing a read control operation, the read control operation controlling the access unit to read the confidential data from the memory device, wherein the read control operation performed by the read control unit precedes the indication operation performed by the indication unit.

With this construction, at the initialization of the apparatus, the CPU is indicated to its processing after the confidential data stored in the memory device is read into the system LSI. Due to this, a third party is not able to specify the storage region into which the confidential data is written even if the third party tries to trace the operation of the CPU from the outside of the system LSI. Because the third party is not provided with a clue to specify the storage region of the confidential data, the third party fails to achieve its malice intention. This prevents the hacking into the STB from happening.

Here, the apparatus may include a clock signal generator that starts outputting a clock signal at the initialization of the apparatus, the clock signal being a time series of clock pulses, the system integrated circuit may further include a counter for counting a number of clock pulses in the time series outputted by the clock signal generator, the indication unit may perform the indication operation when a count of the counter reaches a first predetermined value, and the read control unit may perform the read control operation when the count of the counter reaches a second predetermined value that is smaller than the first predetermined value.

With this construction, the confidential data is read from the memory device before the CPU is indicated to start its processing. Therefore, even if a third party tries to observe the operation of the CPU using a logic analyzer, a storage region of the confidential data in the system LSI cannot be specified.

Here, the confidential data may be encrypted data obtained by encrypting identification information relating to the apparatus or a user who operates the apparatus, the system integrated circuit may further include a decryption unit for decrypting the encrypted data read by the access unit, to obtain the identification information, and the central processing unit may perform processing using the obtained identification information, after indicated to start up.

With this construction, identification information that is used in a transaction involving the electronic money is stored in the memory device after being encrypted. Therefore, even if a third party makes a dead copy of the storage contents of the memory device, the third party cannot obtain the confidential data.

Here, the confidential data may be a device key that is unique to the memory device, the system integrated circuit may further include an encryption unit for encrypting, when an instruction to write data is given by the central processing unit, the data using the device key, and the access unit may write the encrypted data to the memory device.

With this construction, data to be stored in the memory device is encrypted using the device key that is unique to the memory device, and the encrypted data is stored in the memory device. Due to this, even if a third party makes a dead copy of the storage contents of the memory device, the third party fails to use a program and data included therein. Accordingly, the confidentiality and the copyrights of the program and the data can be protected.

Also, the device key used for the encryption is read into the system LSI before the CPU starts its processing. Therefore, even if the third party traces the operation of the CPU, the possibility of the device key being revealed is low.

Here, the memory device may be connected to the system integrated circuit via a bus and a serial line, and the access unit may (a) receive the confidential data from the memory device via the serial line, when the read control operation is performed by the read control unit, and (b) receive data or an instruction from the memory device via the bus, when the central processing unit starts processing.

With this construction, the confidential data is transmitted from the memory device to the system LSI via the serial line. Even if the reverse analysis is performed on the transmission contents of the bus using a logic analyzer or the like, the confidential data is not revealed.

The above object of the present invention can also be achieved by a system integrated circuit that is connected to a memory device, the memory device storing confidential data and a program that includes a plurality of instructions, the system integrated circuit including: a central processing unit for sequentially reading and decoding the instructions included in the program; and a storage unit having a plurality of storage regions; wherein the program includes a first instruction to read the confidential data and a second instruction to perform processing using the confidential data, the first instruction preceding the second instruction, and the system integrated circuit further includes a read unit for reading the confidential data from the memory device and writing the read confidential data to a predetermined one of the storage regions, when the first instruction is decoded by the central processing unit.

With this construction, the confidential data is read when the CPU issues a read request. Accordingly, the confidential data can be read not only at the initialization of the apparatus but also at any time. Due to this, even if a third party tries to perform the thorough reverse analysis of data transmitted at the initialization of the apparatus to obtain the confidential data, the third party's persistent reverse analysis can be made in vain.

### BRIEF DESCRIPTION OF THE DRAWINGS

These and other objects, advantages and features of the invention will become apparent from the following description thereof taken in conjunction with the accompanying drawings that illustrate a specific embodiment of the invention. In the drawings:
FIG. 1 illustrates an internal structure of an STB in which a system LSI relating to a first embodiment of the present invention is mounted;
FIG. 2 illustrates an internal structure of the system LSI;
FIG. 3 illustrates a timing chart showing a temporal transition of the processing performed by an initial-state management apparatus 15;
FIG. 4 illustrates an internal structure of a system LSI relating to a second embodiment of the present invention;
FIG. 5 illustrates an internal structure of a system LSI relating to a third embodiment of the present invention;
FIG. 6 illustrates an internal structure of a system LSI relating to a fifth embodiment of the present invention;
FIG. 7 illustrates an internal structure of an encryption conversion unit 50 provided in the system LSI relating to the fifth embodiment of the present invention;
FIG. 8 illustrates an internal structure of a system LSI relating to a sixth embodiment of the present invention; and
FIG. 9 illustrates an internal structure of an encryption conversion unit 50.

### DESCRIPTION OF THE PREFERRED EMBODIMENTS

The following describes preferred embodiments of a system LSI (Large Scale Integrated circuit) relating to the present invention, with reference to the drawings.

### (FIRST EMBODIMENT)

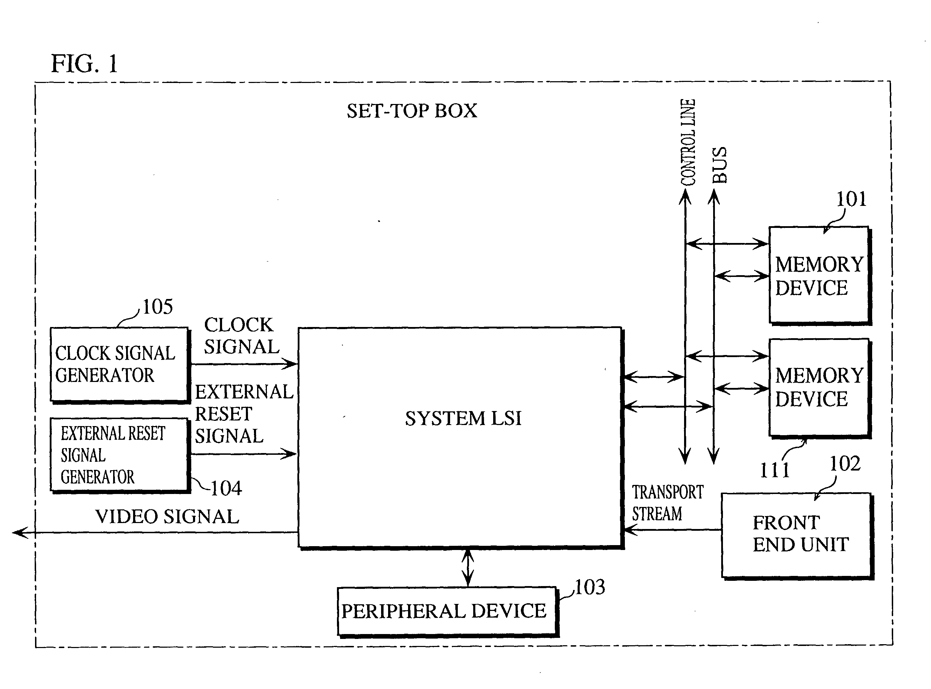

A system LSI relating to the present embodiment is mounted in an apparatus such as an STB. FIG. 1 illustrates an internal structure of the STB in which the system LSI is mounted. The STB receives a broadcast wave transmitted via either a satellite broadcast, a terrestrial wave, or a cable broadcast, demultiplexes a transport stream included in the broadcast wave, decodes the transport stream, and outputs a video signal, an audio signal, and the like. The STB is combined with a television set, a personal computer, or the like for use in general homes.

As illustrated in FIG. 1, the STB includes memory devices 101 and 111, a front end unit 102, a peripheral device 103, an external reset signal generator 104, and a clock signal generator 105.

The memory devices 101 and 111 may be EEPROMs (electrically erasable and programmable ROM) or SDRAMs (synchronous dynamic random access memory) for storing a program and data that realize the operation of the apparatus, an apparatus ID, and a user ID, or may be IC cards or memory cards that are internally equipped with the EEPROM or the SDRAM. The memory devices 101 and 111 are connected to the system LSI via a bus and a control line, and constitute a secondary memory. The apparatus ID and the user ID need to be treated as confidential, and are stored in the memory devices 101 or 111 after being encrypted.

An algorithm called "bit shuffling" is used for encrypting such confidential data. This algorithm is to shuffle bit data that constitutes an original apparatus ID and an original user ID with a predetermined regularity, to generate an encrypted apparatus ID and an encrypted user ID. The original apparatus ID or the original user ID can be obtained by re-shuffling the encrypted apparatus ID or the encrypted user ID using the same regularity.

The front end unit 102 demodulates the broadcast wave received by a satellite broadcast antenna or the like, and sequentially outputs a transport stream defined by MPEG-2 Specification to the system LSI.

The peripheral device 103 includes a front panel and a remote control transmission/reception unit.

The external reset signal generator 104 outputs an external reset signal at the initialization of the apparatus.

The clock signal generator 105 outputs a clock signal at the initialization of the apparatus.

Logic circuits to realize the function of the STB are realized within the system LSI. Therefore, the circuit board in the STB has an extremely simple structure.

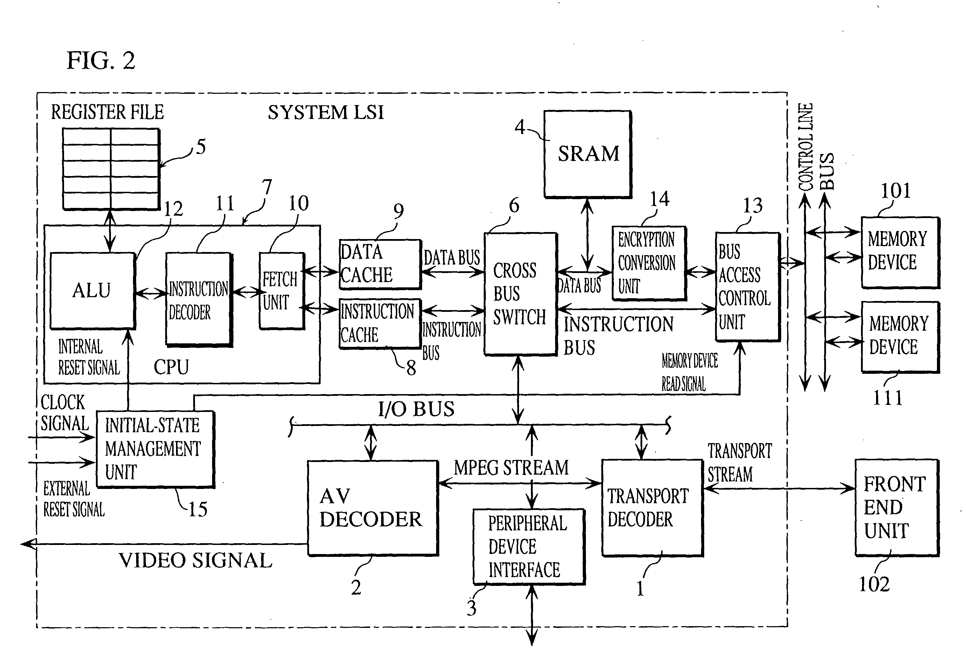

The simpler structure of the circuit board in the STB means the higher density of the various components mounted in the system LSI. The following describes an internal structure of the system LSI as to the components mounted therein, with reference to FIG. 2. As illustrated in FIG. 2, the system LSI is roughly composed of a transport decoder 1, an AV decoder 2, a peripheral device interface 3, an SRAM 4, a register file 5, a cross bus switch 6, a central processing unit (CPU) 7, an instruction cache 8, a data cache 9, a fetch unit 10, an instruction decoder 11, an arithmetic logic unit (ALU) 12, a bus access control unit 13, an encryption conversion unit 14, and an initial-state management unit 15.

The transport decoder 1 demultiplexes a transport stream outputted from the front end unit 102, to obtain a video stream and an audio stream defined by MPEG-2 Specification. The transport decoder 1 then outputs the obtained video stream and the audio stream to the AV decoder 2.

The AV decoder 2 demodulates the video stream and the audio stream to obtain a video signal and an audio signal.

The peripheral device interface 3 is an interface with the front panel and the remote control transmission/reception unit provided in the peripheral device 103.

The SRAM 4 stores a part of data that is stored in the memory devices 101 and 111.

The register file 5 stores a part of the data that is stored in the memory devices 101 and 111. While the memory devices 101 and 111 are called the secondary memory, the SRAM 4 and the register file 5 are called a primary memory.

The cross bus switch 6 provides connection between a data bus, an I/O bus, an address bus, and an instruction bus.

The CPU 7 is connected to the cross bus switch 6 via a cache memory for instructions (the instruction cache memory 8) and a cache memory for data (the data cache memory 9), and performs integrated control in the system LSI. The CPU 7 includes the fetch unit 10, the instruction decoder 11, and the ALU 12. The fetch unit 10 fetches an instruction from the memory devices 101 or 111 via the instruction cache 8 and the data cache 9. The instruction decoder 11 decodes the fetched instruction. According to the decoding result, the ALU 12 performs an arithmetic operation using data fetched from the memory devices 101 or 111 to the system LSI. This is illustrated in the CPU 7 in FIG. 2.

The bus access control unit 13 reads/writes data to/from the memory devices 101 and 111 in accordance with an instruction given by the CPU. The following describes detailed processing of the bus access control unit 13, by dividing it into four items (13.i), (13.ii), (13.iii), and (13.iv).
(13.i) To read data from the memory devices 101 or 111, the bus access control unit 13 instructs, via the control line, the secondary memory to output its storage contents to the data bus. The storage contents are sequentially outputted, so that the bus access control unit 13 sequentially reads the storage contents and stores them into the primary memory.
(13.ii) To write data into the memory devices 101 or 111, the bus access control unit 13 sequentially outputs the storage contents of the primary memory to the data bus. At the same time, the bus access control unit 13 instructs, via the control line, the memory devices 101 or 111to read the storage contents. The memory devices 101 or 111 reads the transmission contents of the data bus according to this instruction. In this way, writing of the data from the system LSI to the memory devices 101 or 111 is performed.
(13.iii) The writing/reading data to/from the memory devices 101 or 111 by the bus access control unit 13 is performed under the control of the CPU 7. In some cases, however, it may be performed under the control of the initial-state management unit 15. More specifically, to read an instruction that constitutes a program, or to read/write data to/from the memory devices 101 or 111 along with the execution of the program, the bus access control unit 13 accesses the memory devices 101 or 111 under the control of the CPU 7. On the other hand, the bus access control unit 13 accesses the memory devices 101 or 111 under the control of the initial-state management unit, to read confidential data stored in the memory devices 101 or 111 at the initialization of the apparatus.
(13.iv) To give the access instruction via the control line, the bus access control unit 13 outputs signals of three types: a select signal, an address signal, and a command signal. The select signal is a signal for selecting one of the memory devices 101 and 111. The address signal is a signal indicating an address to be accessed in the selected one of the memory devices 101 and 111. The command signal is a signal indicating whether this access is reading or writing.

The encryption conversion unit 14 decrypts, when the storage contents read into the system LSI by the bus access control unit 13 is confidential data, the confidential data to obtain the original data. The encryption conversion unit 14 then stores the obtained original data into one of the data cache memory 9 and the register file 5 that constitute the primary memory.

When the confidential data is stored in the primary memory and the instruction from the CPU 7 is given to write the confidential data into the memory devices 101 or 101, the encryption conversion unit 14 encrypts the confidential data, and outputs the encrypted confidential data to the bus access control unit 13, so that this data is written into the memory devices 101 or 111.

The initial-state management unit 15 then waits until a predetermined first time period elapses since the initialization of the apparatus starts, and then instructs the bus access control unit 13 to read the apparatus ID and the user ID from the memory devices 101 or 111. When a predetermined second time period elapses since the initialization of the apparatus starts, the initial-state management unit 15 outputs an internal reset signal, so that the CPU 7 starts its operation. Note that the first time period mentioned above is a time period from when the power is supplied, to when the hard ware of the entire STB is stabilized. The predetermined first time period is provided to ensure normal operations of the CPU and the memory devices. Note also that the second time period mentioned above is longer than the first time period. In the present embodiment, the second time period is set twice as long as the first time period. The initial-state management unit 15 is equipped with a counter for monitoring the first time period and the second time period.

Here, the initialization of the apparatus starts when a power voltage supplied to the apparatus reaches a predetermined voltage value and the external reset signal rises from LOW to HIGH. A while after the power is supplied to the apparatus, the clock signal generator 105 starts generating the clock signal.

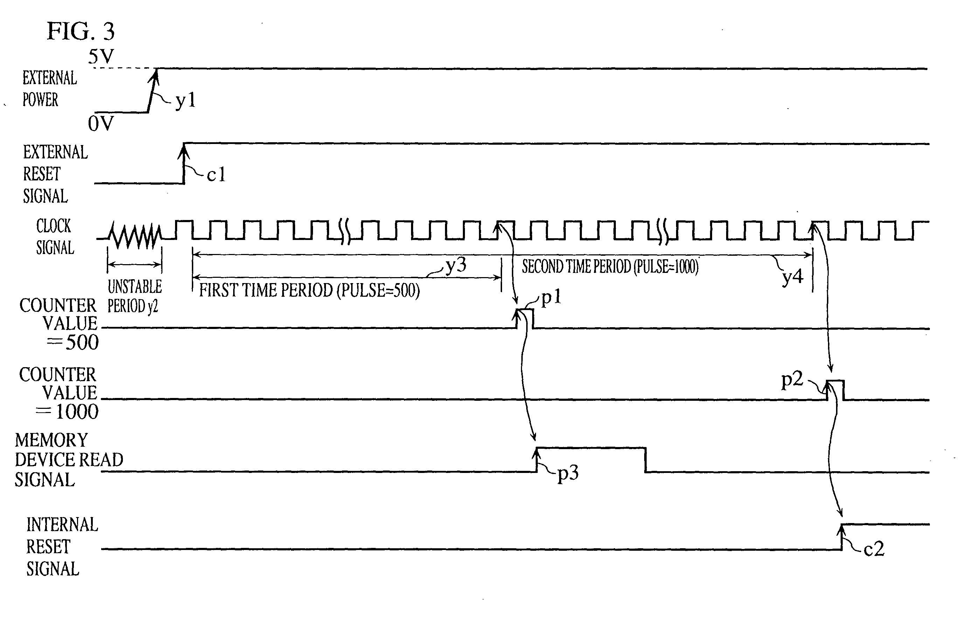

FIG. 3 illustrates a timing chart showing a temporal transition of the processing performed by the initial-state management unit 15. In the figure, the first stage indicates a power level outside the apparatus. The second stage indicates the external reset signal. The third stage indicates the clock signal made up of a clock pulse sequence. The fourth and fifth stages indicate notice signals outputted by the counter equipped in the initial-state management unit 15. As illustrated in the figure, the notice signals are outputted at the points where the 500th clock pulse and the 1000th clock pulse are generated respectively. The sixth stage indicates a read signal issued by the bus access control unit 13. The seventh stage indicates an internal reset signal issuedtothe initial-state management unit 15. In the figure, the first time period is a period from the start of the clock signal to the 500th clock pulse, and the second time period is a period from the start of the clock signal to the 1000th clock pulse.

When the initialization of the apparatus starts, the power rises from 0V to 5V as indicated by arrow y1. This is followed by an unstable period y2. After this unstable period y2, the clock signal generator 105 starts outputting clock pulses. Here, the external reset signal generator 104 rises the external signal from LOW to HIGH as indicated by arrow c1. When the outputting of the clock pulses starts and the external signal rises from LOW to HIGH, the counter equipped in the initial-state management unit 15 starts counting clock pulses. Following this, when the counter counts the 500th clock pulse as indicated by arrow y3, the counter in the initial-state management unit 15 outputs notice signal p1 to the bus access control unit 13. When the notice signal p1 is outputted, the bus access control unit 13 outputs read signal p3 to the memory devices 101 or 111 so that the apparatus ID and the user ID are read.

Following this, the second time period elapses as indicated by arrow y4, and the counter counts the 1000th clock pulse, so that the counter in the initial-state management unit 15 outputs notice signal p2 to the bus access control unit 13. Following this, the bus access control unit 13 rises the internal reset signal c2 from LOW to HIGH. When the internal reset signal c2 is risen, the CPU 7 controls the bus access control unit 13 to fetch an instruction that constitutes a program from the memory devices 101 or 111 and to execute the fetched instruction.

According to the system LSI relating to the present embodiment, confidential data stored in the memory devices 101 or 111 is read into the system LSI at the initialization of the STB. After this, the CPU 7 is indicated to start its operation as described above. Therefore, even if a third party tries to trace the operation of the CPU 7 from outside the system LSI, the third party fails to specify a storage region of the confidential data within the system LSI. The system LSI provides the third party with no clue to specify the storage region within the system LSI, and so prevents the third party from achieving its malice intention to specify the storage region of the confidential data. This prevents the hacking into the STB from happening.

### (SECOND EMBODIMENT)

The first embodiment describes the case where confidential data is transmitted via a bus. In that case, if the transmission contents of the bus are observed by connecting the bus to such a device as a logic analyzer, the confidential data in a state of being encrypted can be obtained. Though the confidential data is being encrypted, there is the possibility that the apparatus ID and the user ID might be revealed by the thorough reverse analysis . In view of this, the present embodiment proposes an improvement for preventing the confidential data from being revealed even when the transmission contents of the bus are observed.

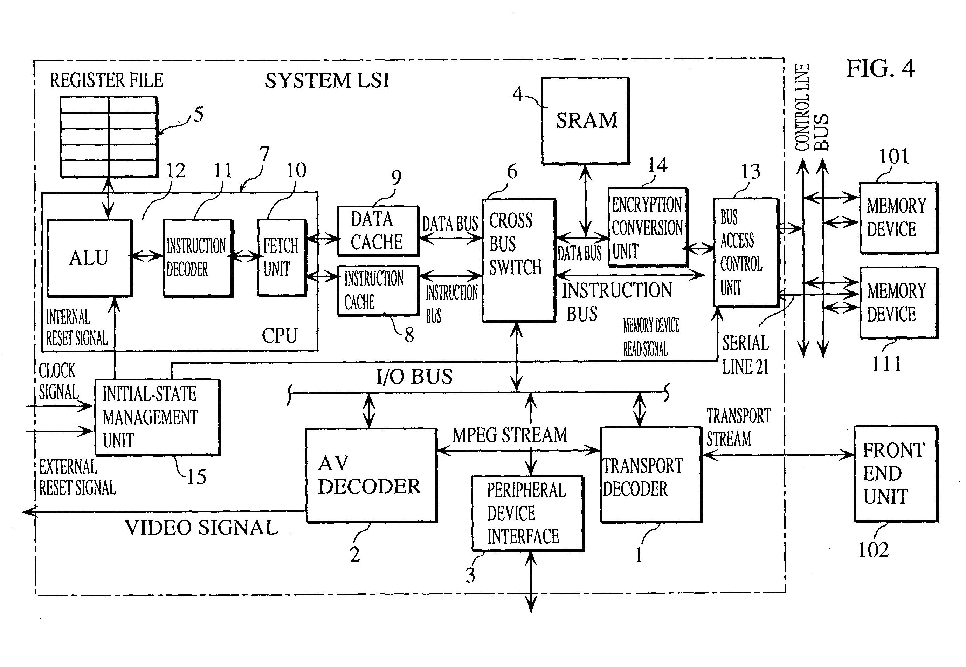

FIG. 4 illustrates an internal structure of the apparatus relating to the second embodiment of the present invention. As illustrated in the figure, the bus access control unit 13 and the memory devices 101 and 111 are connected via a special serial line 21.

While the confidential data is treated in the same manner as instructions and other data, and is transmitted via the data bus in the first embodiment, the system LSI in the second embodiment transmits the confidential data not via the data bus but via the special serial line 21. When the confidential data is transmitted from the memory devices 101 and 111 to the system LSI via the serial line 21, the confidential data is not revealed, for example, even if the reverse analysis is performed on the transmission contents of the bus using the logic analyzer or the like. Since the confidentiality is ensured by transmitting such data via the serial line 21, the system LSI in the present invention may not be provided with the encryption conversion unit 14 and the confidential data may be stored in the memory devices 101 or 111 without being encrypted.

### (THIRD EMBODIMENT)

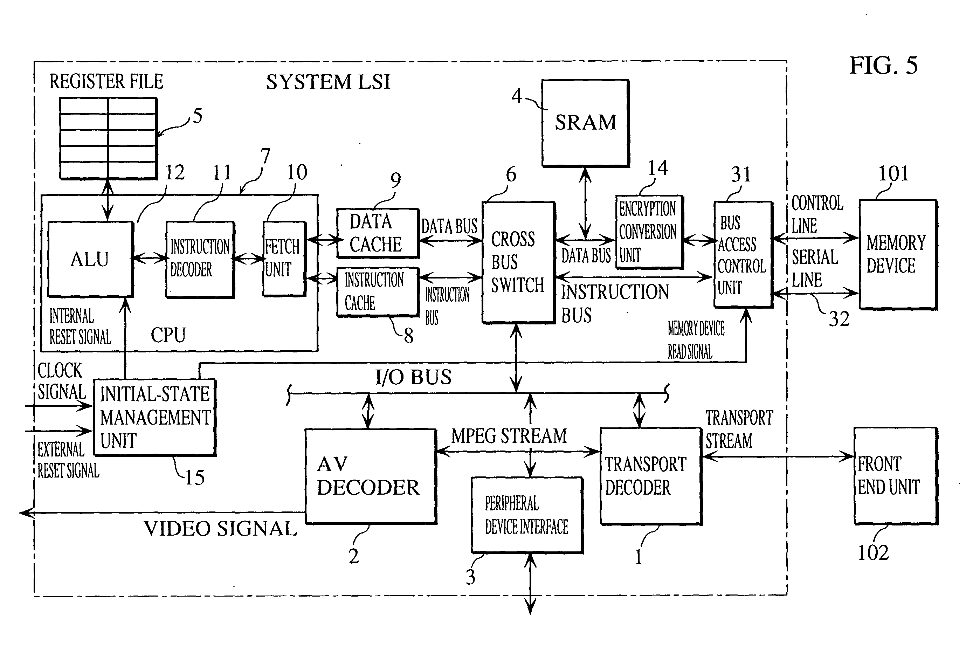

The first embodiment describes the case where the secondary memory is made up of the memory devices 101 and 111. However, the present embodiment proposes that a single memory device 101 constitutes the secondary memory. FIG. 5 illustrates an internal structure of the apparatus relating to the third embodiment.

In FIG. 5, the system LSI includes a device access control unit 31 that controls the single memory device 101, instead of the bus access control unit 13 that control the memory devices 101 and 111 through bus control in the first embodiment. The system LSI controls the memory device 101 via the control line as in the first embodiment. In the first embodiment, the bus access control unit 13 transmits data via the bus. However, in the third embodiment, the device access control unit 31 transmits data via the serial line 32.

As the system LSI in the present embodiment performs access control only over the single memory device 101, its structure can be simplified compared with the case where the system LSI controls the memory devices 101 and 111 via the bus. Also, compared with the reverse analysis of the bus, the reverse analysis of the serial line is more difficult. Therefore, the present embodiment more effectively prevents the confidential data from being revealed.

### (FOURTH EMBODIMENT)

The first embodiment describes the case where confidential data stored in the memory devices 101 or 111 is read into the system LSI at the initialization of the apparatus. The fourth embodiment proposes to read the confidential data from the memory devices 101 or 111 into the system LSI not at the initialization of the apparatus but at the time when the CPU 7 requires the confidential data.

To realize such reading of the confidential data when required by the CPU 7, (1) the memory devices 101 and 111, (2) the CPU 7, and (3) the initial-state management unit 15 described in the first embodiment are improved in the present embodiment. The following describes the improvements given in the fourth embodiment.
(1) The memory devices 101 and 111 in the fourth embodiment differ from those in the first embodiment in the following points. The first point is that a program stored in the memory devices 101 or 111 includes a read instruction to read confidential data and write the read confidential data into one of the plurality of storage regions. The second point is that this read instruction for the confidential data is located prior to an instruction to utilize the read confidential data. The read instruction for the confidential data differs from other read instructions in that this read instruction does not indicate a storage region into which the read confidential data is to be written. Due to this, even if a third party who deassembles the program in the memory devices 101 or 111 notices this read instruction for the confidential data, the third party fails to specify the storage region of the confidential data, out of the plurality of storage regions within the system LSI.
(2) The CPU 7 in the fourth embodiment differs from that in the first embodiment in the following point. When the read instruction for the confidential data is fetched from the memory devices 101 or 111 and the read instruction is decoded, the CPU 7 issues a read request to the initial-state management unit 15.
(3) The initial-state management unit 15 in the fourth embodiment does not necessarily read the confidential data at the initialization of the apparatus. Instead, the initial-state management unit 15 reads the confidential data from the memory devices 101 or 111 when the read request is issued from the CPU 7, and stores the read confidential data into a predetermined storage region in the primary memory. On storage of the confidential data into the primary memory, the CPU 7 performs processing utilizing this confidential data.

As described above, the initial-state management unit 15 reads the confidential data when the CPU 7 decodes the read instruction and issues the read request for the confidential data. Therefore, the confidential data can be read into the system LSI not only at the initialization of the apparatus but also at any time. Due to this, even if a third party tries to perform the thorough reverse analysis of data transmitted at the initialization of the apparatus, the third party's persistent reverse analysis can be made in vain.

Note that the memory devices 101 and 111 may be connected via a serial line and the confidential data may be transmitted via the serial line in the present embodiment.

### (FIFTH EMBODIMENT)

In the first embodiment, it is clear that data and a program that realize the function of the apparatus are stored in the memory devices 101 or 111. Therefore, the data and the program used by the apparatus may be easily duplicated by making a copy of the storage contents of the memory devices 101 and 111 into another storage medium. In the first embodiment, only the apparatus ID and the user ID are encrypted and stored in the memory devices 101 or 111. In the fifth embodiment, all data to be stored in the memory devices 101 or 111 is first encrypted using an encryption key (device key) which is unique to the memory devices 101 and 111, and the encrypted data is stored in the memory devices 101 or 111. This prevents a dead copy from being made.

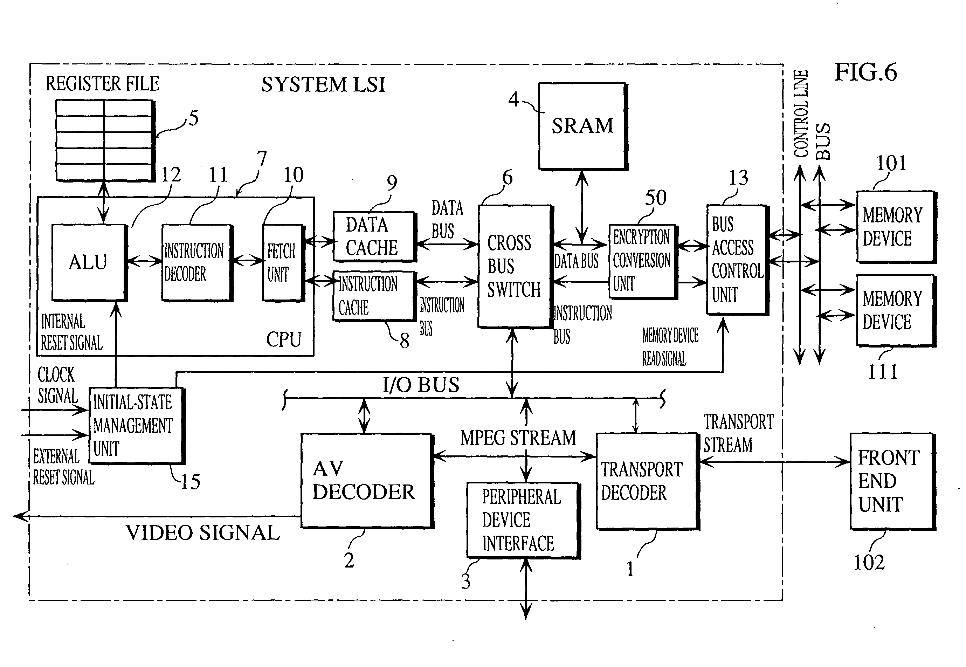

FIG. 6 illustrates an internal structure of the system LSI relating to the fifth embodiment of the present invention. FIG. 6 differs from FIG. 2 in that the encryption conversion unit 14 is not provided, and instead, an encryption conversion unit 50 is provided between the cross bus switch 6 and the bus access control unit 13 in FIG. 6.

Also, while the initial-state management unit 15 in the first embodiment controls the bus access control unit 13 to read the apparatus ID and the user ID from the memory devices 101 or 111 when the first time period elapses from the initialization of the apparatus, the initial-state management unit 15 in the fifth embodiment controls the bus access control unit 13 to read an encrypted device key when the first time period elapses from the initialization of the apparatus.

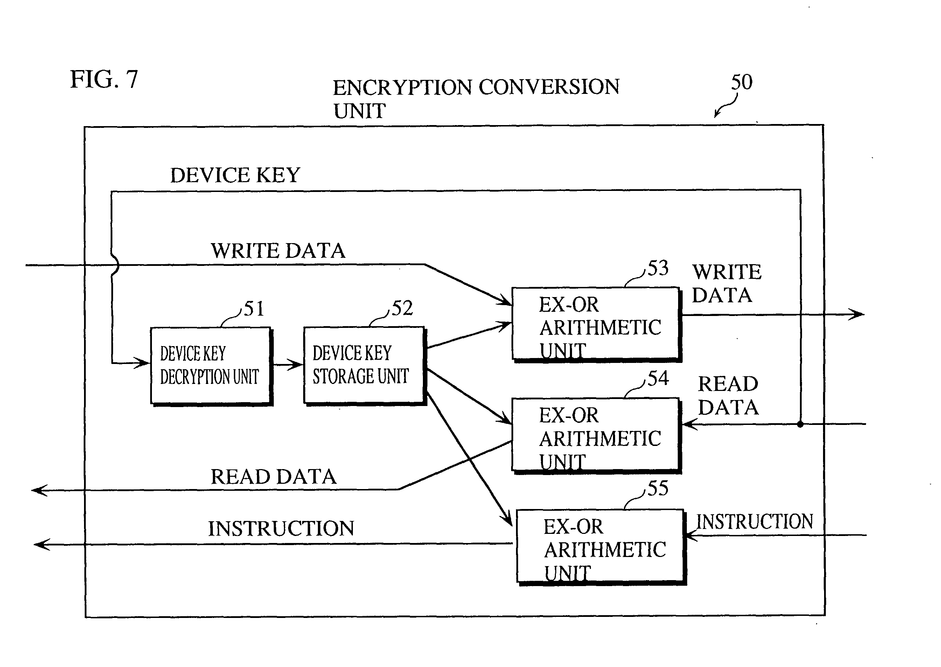

FIG. 7 illustrates an internal structure of the encryption conversion unit 50. As illustrated in FIG. 7, the encryption conversion unit 50 includes a device key decryption unit 51, a device key storage unit 52, an EX-OR arithmetic unit 53, an EX-OR arithmetic unit 54, and an EX-OR arithmetic unit 55.

The device key decryption unit 51 decrypts, upon receipt of the encrypted device key read from the memory device, the encrypted device key to obtain the original device key.

The device key storage unit 52 stores the original device key decrypted by the device key decryption unit 51.

The EX-OR arithmetic unit 53 performs an EX-OR calculation of data to be written into the memory devices 101 or 111, and the device key, and outputs the resulting value to the bus access control unit 13. Due to this, the data to be written into the memory devices 101 or 111 is encrypted using the device key unique to the memory devices 101 and 111.

The EX-OR arithmetic unit 54 performs an EX-OR calculation of data read from the memory devices 101 or 111 and the device key, and outputs the resulting value to the primary memory. The EX-OR arithmetic unit 54 performs an EX-OR calculation of an instruction read from the memory devices 101 or 111 and the device key, and outputs the resulting value to the primary memory. This allows the data and the instruction that are being encrypted using the device key unique to the memory devices 101 and 111 to be decrypted when they are read from the memory devices 101 or 111.

To read/write data to/from the memory devices 101 or 111, the EX-OR arithmetic units 53 to 55 perform the EX-OR calculation of the device key and the data. This enables the data to be stored in the memory devices 101 or 111 in a state of being encrypted using the device key unique to the memory devices 101 and 111.

According to the present embodiment, data to be stored in the memory devices 101 or 111 is encrypted using the device key unique to the memory devices 101 and 111, and then the encrypted data is stored in the memory devices 101 or 111 as described above. Therefore, even if a third party makes a dead copy of the storage contents of the memory devices 101 or 111, a program or data included therein cannot be used in another apparatus. Due to this, protection of the confidentiality or the copyrights of the program and the data can be ensured.

Also, the device key used for the encryption is read into the system LSI before the operation of the CPU 7 starts. Accordingly, even If a third party traces the operation of the CPU 7, the possibility of the third party obtaining the device key is low.

Note that the memory devices 101 and 111 may be connected to the system LSI via a serial line and the confidential data may be transmitted via the serial line in the present embodiment.

### (SIXTH EMBODIMENT)

The sixth embodiment of the present invention relates to an improvement to store an update version of an instruction or data stored in the STB, into an external memory device 101. The update version is delivered to an STB located in each house, via a broadcast wave.

The update version is stored in the external memory device 101 in the STB, and the STB updates the instruction or the data using this update version. Here, the problem lies in the protection of a copyright of the update version. Since the update version is stored in the external memory device 101, a third party may illegally perform the reverse analysis on the update version stored in the external memory device 101, or may illegally transfer the update version to another apparatus. Of course, the broadcaster does not just sit back in this situation, but attends to this situation by broadcasting the update version after encrypting it using a unique encryption method. However, this countermeasure does not have an enough effect in protecting the copyright of the update version if the update version remains stored in the external memory device 101. This is due to the following facts (i) and (ii).
(i) As one example, when an update version is broadcasted to STBs respectively installed in 10,000 homes to update the STBs uniformly, the STBs installed in 10,000 homes have the update version stored in the same state in respective external memory devices 101.
(ii) The update version stored in the same state in respective external memory devices 101 in the STBs installed in 10,000 homes increases the possibility of its encryption method being revealed.

In view of this, the present embodiment applies the technique described in the fifth embodiment to the reading and wringing of the update version that has been encrypted by the broadcaster. The update version that has been encrypted by the broadcaster is first encrypted using the device key and then stored in the external apparatus 101. To read the update version, the encrypted update version is read from the external memory device 101 and is decrypted using the device key and then read into the instruction cache 8 and the data cache 9.

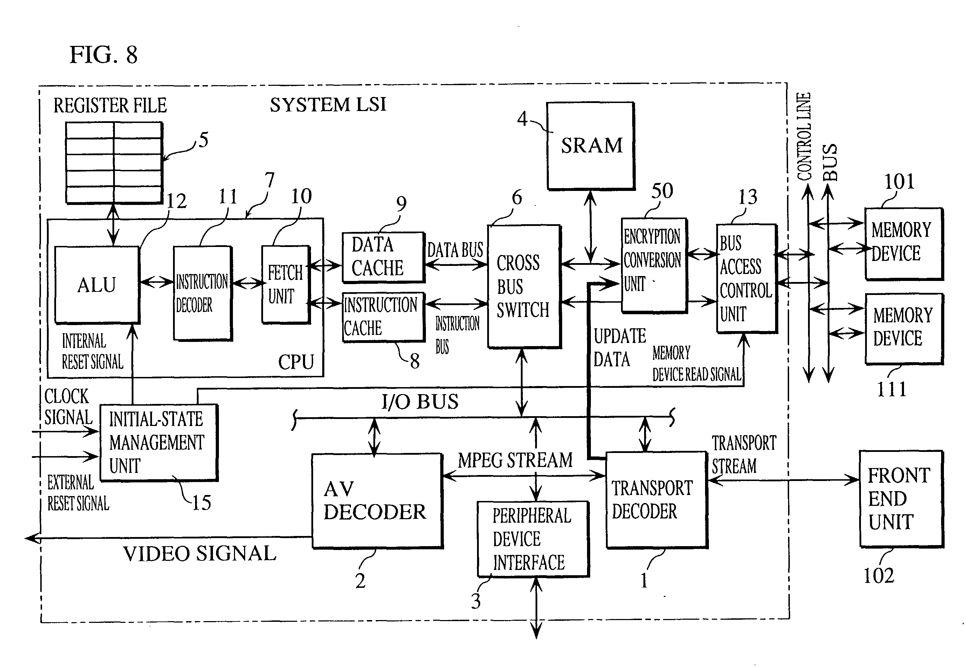

FIG. 8 illustrates an internal structure of the system LSI relating to the sixth embodiment of the present invention. In FIG. 8, the update version is broadcasted as being multiplexed with a transport stream. The transport decoder 1 in FIG. 8 obtains the update version from the transport stream, and outputs the obtained update version to the encryption conversion unit 50.

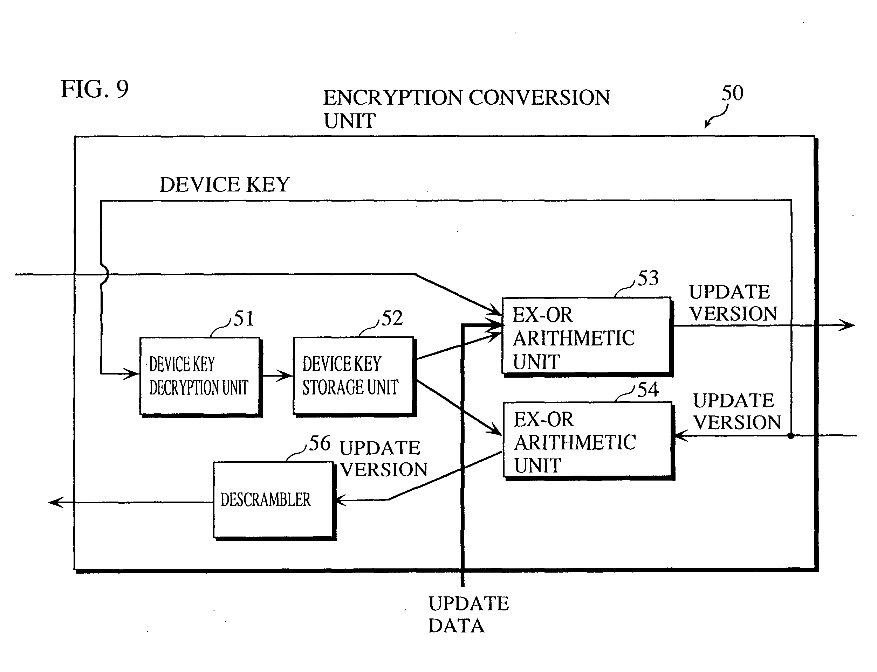

FIG. 9 illustrates an internal structure of the encryption conversion unit 50. The encryption conversion unit 50 in the figure differs from the encryption conversion unit 50 shown in FIG. 7, in that the encryption conversion unit 50 in FIG. 9 is equipped with a descrambler 56 instead of the EX-OR arithmetic unit 55. Also, the EX-OR arithmetic unit 53 performs an EX-OR calculation of the update version outputted by the transport decoder 1 and the device key, and outputs the resulting value to the bus access control unit 13 so that the external memory device 101 reads the resulting value. The EX-OR arithmetic unit 54 decrypts the update version written in the external memory device 101 using the device key, and outputs it to the instruction cache 8 and the data cache 9. Following this, the descrambler 56 provided in FIG. 9 further decrypts the update version decrypted by the EX-OR arithmetic unit 54 using the decryption key provided by the broadcaster, to obtain the original update version.

The structure of the encryption conversion unit 50 described above has the following advantages. Compared with the case where a pair of a descrambler and a scrambler is mounted in the system LSI, the possibility of the encryption method being analyzed is higher than the case where only the descrambler is mounted in the system LSI that is the case of the present embodiment. When only a scrambler is mounted in the system LSI, the possibility of the encryption method used to encrypt the update version being revealed is reduced to half.

Accordingly, in the present embodiment, the possibility of the encryption method being revealed is reduced by mounting only the descrambler in the system LSI.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A system integrated circuit that is incorporated into an apparatus together with a memory device, the memory device storing confidential data, the system integrated circuit comprising:
a central processing unit;
an access unit for reading and writing to and from the memory device;
an indication unit for performing an indication operation at initialization of the apparatus, the indication operation indicating to the central processing unit to start up; and
a read control unit for performing a read control operation, the read control operation controlling the access unit to read the confidential data from the memory device,
wherein the read control operation performed by the read control unit precedes the indication operation performed by the indication unit.

2. The system integrated circuit of Claim 1,
wherein the apparatus includes a clock signal generator that starts outputting a clock signal at the initialization of the apparatus, the clock signal being a time series of clock pulses,
the system integrated circuit further comprises a counter for counting a number of clock pulses in the time series outputted by the clock signal generator,
the indication unit performs the indication operation when a count of the counter reaches a first predetermined value, and
the read control unit performs the read control operation when the count of the counter reaches a second predetermined value that is smaller than the first predetermined value.

3. The system integrated circuit of Claim 2,
wherein the indication operation is to switch an internal reset signal from an inactive state to an active state.

4. The system integrated circuit of Claim 3,
wherein the apparatus includes an external reset signal output unit for switching an external reset signal from an inactive state to an active state, and
the counter starts counting the number of the clock pulses when the external reset signal is switched to the active state.

5. The system integrated circuit of Claim 1,
wherein the confidential data is encrypted data obtained by encrypting identification information relating to the apparatus or a user who operates the apparatus,
the system integrated circuit further comprises a decryption unit for decrypting the encrypted data read by the access unit, to obtain the identification information, and
the central processing unit performs processing using the obtained identification information, after indicated to start up.

6. The system integrated circuit of Claim 1,
wherein the confidential data is a device key that is unique to the memory device,
the system integrated circuit further comprises an encryption unit for encrypting, when an instruction to write data is given by the central processing unit, the data using the device key, and
the access unit writes the encrypted data to the memory device.

7. The system integrated circuit of Claim 6,
wherein the access unit reads the encrypted data from the memory device when an instruction to read the data is given by the central processing unit, and
the system integrated circuit further comprises a decryption unit for decrypting the read encrypted data using the device key.

8. The system integrated circuit of Claim 7,
wherein the apparatus includes a reception unit for receiving a broadcast wave,
the data to be written to the memory device is obtained by the reception unit receiving the broadcast wave, and has been encrypted according to an encryption method determined by a broadcaster beforehand, and
the encryption unit encrypts, using the device key, the obtained data that has been encrypted, when the instruction to write the data is given by the central processing unit.

9. The system integrated circuit of Claim 8,
wherein the decryption unit
(a) decrypts the encrypted data that has been read into the system integrated circuit from the memory device, and
(b) further decrypts the resulting data based on the encryption method, to obtain the data in an original state.

10. The system integrated circuit of Claim 1,
wherein the memory device is connected to the system integrated circuit via a bus, and
the access unit
(a) receives the confidential data via the bus, when the read control operation is performed by the read control unit, and
(b) receives data or an instruction via the bus, when the central processing unit starts processing.

11. The system integrated circuit of Claim 1,
wherein the memory device is connected to the system integrated circuit via a serial line, and
the access unit
(a) receives the confidential data from the memory device via the serial line, when the read control operation is performed by the read control unit, and
(b) receives data or an instruction from the memory device via the serial line, when the central processing unit starts processing.

12. The system integrated circuit of Claim 1,
wherein the memory device is connected to the system integrated circuit via a bus and a serial line, and
the access unit
(a) receives the confidential data from the memory device via the serial line, when the read control operation is performed by the read control unit, and
(b) receives data or an instruction from the memory device via the bus, when the central processing unit starts processing.

13. A system integrated circuit that is connected to a memory device, the memory device storing confidential data and a program that includes a plurality of instructions, the system integrated circuit comprising:
a central processing unit for sequentially reading and decoding the instructions included in the program; and
a storage unit having a plurality of storage regions;
wherein the program includes a first instruction to read the confidential data and a second instruction to perform processing using the confidential data, the first instruction preceding the second instruction, and
the system integrated circuit further comprises a read unit for reading the confidential data from the memory device and writing the read confidential data to a predetermined one of the storage regions, when the first instruction is decoded by the central processing unit.
